# FASCICULE DE BREVET EUROPEEN

(11) **EP 2 199 230 B1**
(45) Date de publication et mention de la délivrance du brevet: **23.01.2013**
(21) Numéro de dépôt: 09179937.9
(22) Date de dépôt: 18.12.2009
(51) Int. Cl.: B65G 11/08

(54) **Goulotte télescopique**
Teleskop-Abfallrutsche
Telescopic chute

(30) Priorité: 22.12.2008 FR 0858924
(43) Date de publication de la demande: 23.06.2010
(73) Titulaire: Entreprise Pierre Cachot, 70160 Senoncour (FR)
(72) Inventeur: Cachot, Pierre, 25000, BESANCON (FR)
(74) Mandataire: Brungard, Yves Francois

(56) Documents cités:
- FR-A- 2 273 734
- US-A- 4 821 861

## Description

La présente invention concerne une goulotte télescopique pour le guidage et l'évacuation des matériaux selon le préambule de la revendication 1.

L'invention concerne également une pièce d'usure inférieure d'un module en deux parties utilisée pour la goulotte. Une telle goulotte est décrite dans le document US-A-4821861.

Cette goulotte est du type constituée par une pluralité de modules de forme tronconique, à section circulaire ou ovale, ou encore de forme tronc-pyramidale.

Ces modules dont destinés à être montés coaxialement les uns au-dessus des autres.

Les modules connus dans ce type d'application présentent un inconvénient majeur du fait de leur usure rapide au contact de certains matériaux, et plus particulièrement les produits issus du concassage, après extraction dans les carrières par exemple.

Les matériaux généralement utilisés pour la réalisation de ces modules craignent l'abrasion, c'est pourquoi il est connu de les renforcer en utilisant du polyuréthane, qui est un matériau très résistant à l'abrasion. Mais son inconvénient réside dans le fait de sa densité, qui rend chaque module très lourd.

De plus, le poids important de l'ensemble de la goulotte engendre une manutention plus difficile et un coût matière important. Au final, un tel poids de la goulotte nécessite d'utiliser des moyens de commande plus puissants, donc également plus onéreux.

Selon une première phase de la démarche inventive, il a été recherché d'alléger chacun des modules constituant la goulotte.

A partir de là, il a été observé que dans des modules tronconiques, ou tronc-pyramidaux, leur partie supérieure de grande ouverture était faiblement sollicitée au passage des matériaux, du fait qu'une goulotte de centrage supérieure de l'installation pénètre à l'intérieur de la partie large du premier module supérieur, et aussi du fait que, pour les modules successifs, les matériaux pénètrent dans leur partie supérieure large, en étant issus de la partie inférieure plus étroite du module précédent. Il en résulte que les parties supérieures larges de chaque module ne jouent en fait qu'un rôle d'accueil des matériaux, épargnant notablement ces parties.

Par conséquent, il a été estimé que les parties supérieures des modules ne nécessitaient pas d'être réalisées en un matériau très résistant à l'abrasion, à savoir le polyuréthane par exemple, ou encore un acier anti-abrasion, acier inoxydable, etc., dans tous les cas un matériau cher et lourd comme évoqué précédemment.

En fait, toujours selon la même observation, c'est bien la partie inférieure du module, dans laquelle se concentre les matériaux, qui subit la plus forte abrasion.

La présente invention a pour but de remédier aux inconvénients précités et découle de l'observation qui vient d'être exposée.

A cet effet, l'invention concerne une goulotte télescopique pour l'évacuation de matériaux, du type constituée par une pluralité de modules, de formes tronconiques ou tronc-pyramidales, destinés à être montés coaxialement les uns au dessus des autres, chacun des modules étant réalisé en deux parties distinctes, dont l'une supérieure présente une ouverture plus large et constitue une pièce d'accueil des matériaux, et dont l'autre inférieure, est d'ouverture plus étroite, caractérisée en ce que ladite partie inférieure B constitue une pièce d'usure supportée et suspendue à la pièce d'accueil, lesdites parties distinctes, constitutives d'un même module, étant d'ouverture et de hauteur différentes, mais de conicité identique, de manière à s'emboîter par gravité coaxialement l'une dans l'autre, pour réaliser un module dont la pièce d'usure inférieure, la plus exposée, est interchangeable.

L'invention concerne également une pièce d'usure inférieure selon les caractéristiques de la revendication 9.

De cette manière, sachant qu'un module standard conçu entièrement en polyuréthane selon l'art antérieur, pèse 60 kg, un module de mêmes dimensions selon l'invention pèse 12 kg au niveau de sa partie supérieure en polyéthylène haute densité, et 8 kg au niveau de sa pièce d'usure inférieure en polyuréthane.

Cela revient à dire que le module selon l'invention pèse 20kg, c'est-à-dire 40 kg de moins qu'un module standard selon l'art antérieur.

A titre d'exemple, une goulotte télescopique d'une hauteur déployée de 7 mètres, constituée par sept modules de 1 mètre de haut, présentera un gain de poids de 7 fois 40 mètres, soit 280 kg pour une goulotte.

Cela induit bien entendu des avantages considérables au niveau du matériel, qui peut être allégé, au niveau de la dimension et de la résistance des câbles, ainsi qu'au niveau de la puissance électrique du treuil de commande.

De plus, une telle goulotte allégée est adaptable à une plus grande diversité de structure support, associée à un convoyeur de matériaux à bandes.

L'invention concerne également les caractéristiques qui ressortiront au cours de la description qui va suivre, et qui devront être considérées isolément ou selon toutes leurs combinaisons techniques possibles.

Cette description donnée à titre d'exemple non limitatif, fera mieux comprendre comment l'invention peut être réalisée en référence aux dessins annexés sur lesquels:
La figure 1 est une vue schématique d'une installation d'évacuation de matériaux mettant en oeuvre une goulotte télescopique selon l'invention.

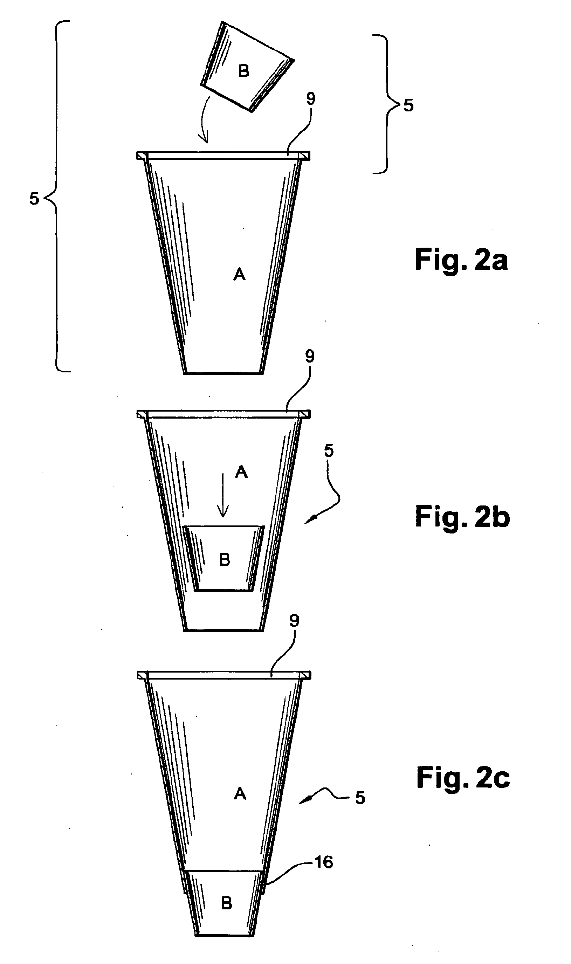

Les figures 2a, 2b, 2c représentent, d'une manière décomposée, les phases successives pour la réalisation d'un module constitutif d'une goulotte télescopique selon la figure 1.
La figure 3 est une vue partielle d'une goulotte en cours de montage, mettant en oeuvre des modules tels que constitués selon les figures 2a, 2b, 2c, les trois modules supérieurs étant en position de déploiement, le dernier module inférieur étant encastré dans l'avant dernier, dans une position de reploiement.

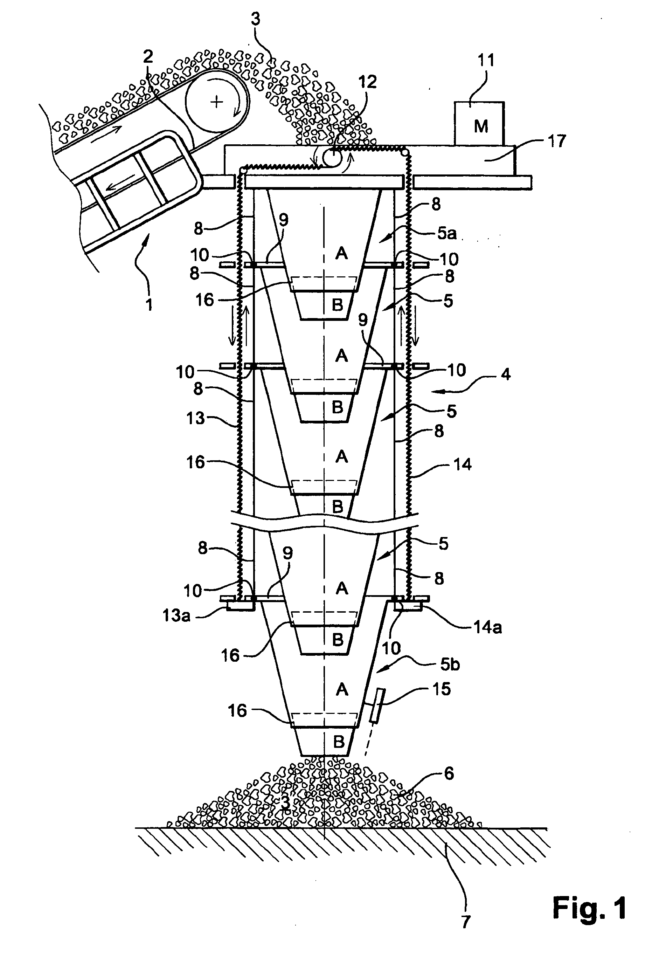

L'installation d'évacuation de matériaux 1 globalement désignée sur la figure 1 est constituée par un système de bandes transporteuses 2 acheminant des matériaux 3, en l'occurrence des cailloux, mais pouvant être également constitués par des céréales ou tout autre produit.

Les matériaux 3 sont acheminés, par l'intermédiaire de la bande transporteuse 2, au sommet d'une goulotte télescopique 4, globalement désignée également, assurant l'évacuation du matériau 3.

De manière connue, une telle goulotte télescopique 4 est constituée par une pluralité de modules 5, de forme tronconique ou tronc-pyramidale, destinés à être montés coaxialement les uns au-dessus des autres, permettant le déversement du matériau 3 dans un premier module supérieur 5a jouant un rôle d'élément de centrage de la goulotte télescopique, guidant le matériau 3 successivement vers les autres modules 5 constituant la goulotte 4, jusqu'au module d'extrémité inférieur 5b, afin de constituer une mise en tas 6 sur le sol 7.

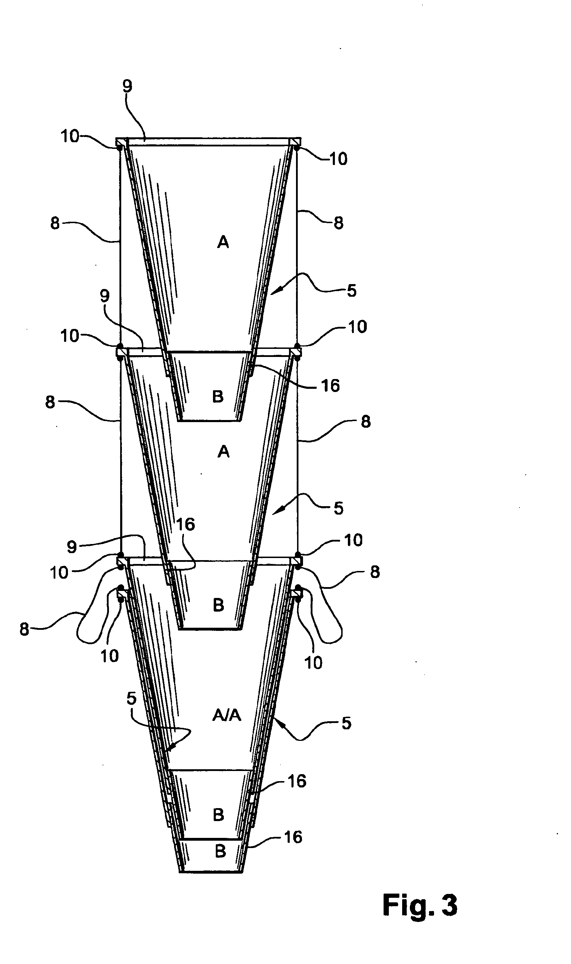

Comme le montrent bien les figures 1 et 3, les modules 5 sont positionnés les uns au-dessus des autres, sans se toucher, à une distance prédéterminée permettant à la partie inférieure de chaque module d'être néanmoins à l'intérieur d'une partie supérieure d'un module successif.

Cette distance est donnée par des câbles flexibles 8, de longueur prédéterminée, reliés fixement entre deux embases 9 de deux modules successifs 5.

L'ensemble des modules 5 est relié ainsi les uns par rapport aux autres.

De cette manière, l'ensemble des modules 5 constituant la goulotte 4 est suspendu les uns par rapport aux autres, tout en permettant d'être emboités les uns par rapport aux autres, au fur et à mesure du reploiement de la goulotte 4, en fonction de la hauteur du tas 6 se constituant progressivement, par déversement du matériau 3.

Selon l'exemple représenté sur la figure 1, les modules 5 sont reliés entre eux par des points de fixation 10 diamétralement opposés. Mais pour un meilleur équilibre, cette liaison pourrait être effectuée en trois points à 120°.

Une telle installation comporte également des moyens de commande en montée ou en descente de l'ensemble des modules 5 constituant la goulotte 4, qui sont formés par un moteur 11 entraînant en rotation un treuil 12 sur lequel s'enroule des câbles 13,14 rendus solidaires à leur extrémité 13a,14a de l'embase 9 du dernier module inférieur 5b, lesdits câbles 13,14 traversant librement les autres embases 9 des autres modules 5.

De cette manière, on comprend bien que l'entraînement du dernier module 5b provoquera, dans un mouvement ascendant, l'entraînement et l'empilement les uns dans les autres des modules 5, par emboîtement conique ou tronconique, ou encore dans un mouvement descendant, pour provoquer le déboîtement des mêmes modules 5 lors du déploiement de la goulotte 4.

Selon le présent exemple de réalisation, les modules sont de forme tronconique, donc de section circulaire. Ils pourraient être également de forme tronc-pyramidale, donc de section quadrangulaire, ou encore de section ovale.

Il est à noter également que la commande en déploiement ou en reploiement de la goulotte 4 s'effectue à partir d'informations fournies par une sonde de niveau 15.

Selon l'invention, chacun des modules 5,5a,5b est réalisé en deux parties distinctes « A », « B », dont l'une supérieure « A » présente une ouverture plus large et constitue une pièce d'accueil des matériaux 3, et dont l'autre inférieure « B », d'ouverture plus étroite, constitue une pièce d'usure supportée et suspendue à la pièce d'accueil « A », lesdites parties distinctes « A », « B », constitutives d'un même module, étant d'ouverture 5,5a,5b et de hauteur différentes, mais de conicité identique, de manière à s'emboîter par gravité coaxialement l'une dans l'autre, pour réaliser un module 5,5a,5b dont la pièce d'usure inférieure « B », la plus exposée, est interchangeable.

Toujours selon le même concept inventif, la pièce d'usure inférieure « B » de chacun des modules 5,5a,5b la composant est réalisée dans un matériau dont la résistance à l'abrasion est supérieure au matériau dans lequel est réalisée la pièce d'accueil supérieure « A » du même module 5,5a,5b.

Préférentiellement, la pièce d'accueil supérieure « A » de chacun des modules 5,5a,5b la composant est réalisée en polyéthylène haute densité.

Cette partie « A » des modules 5,5a,5b étant la moins exposée, elle peut être réalisée dans un matériau moins résistant à l'abrasion, et donc plus léger.

Par contre, la pièce d'usure inférieure « B » de chacun des modules 5,5a,5b la composant est réalisée en polyuréthane par exemple, ou encore en acier anti-abrasion, acier inoxydable, etc., qui sont des matériaux beaucoup plus résistants à l'abrasion. Mais bien que plus lourd, il ne constitue qu'une faible partie de la hauteur des modules constituant la goulotte, ce qui conduit à un gain de poids important, comme démontré plus haut.

Par ailleurs, les modules 5,5a,5b composant la goulotte sont reliés les uns aux autres par des éléments de liaison flexibles 8, constitués par exemple par des chaines ou encore des élingues textiles.

Ces liaisons flexibles sont constituées préférentiellement par des câbles en acier.

Ces câbles sont reliés aux parties supérieures de chaque module en des points fixes formant entre eux des angles de 120°, s'il s'agit de modules de section circulaire, ou des angles de 90°, s'il s'agit de modules de section quadrangulaire ou ovale.

Ces mêmes câbles relient également les modules de la goulotte les uns par rapport aux autres, à une distance donnée également par les câbles et de façon à ce que lesdits modules soient positionnés les uns au-dessus des autres, dans le même axe, mais sans emboîtement, contrairement aux deux parties constituant chaque module selon l'invention, qui s'emboîtent nécessairement dans la zone d'emboîtement 16.

De cette manière, en position de déploiement maximum de la goulotte télescopique 4, les éléments la composant ne sont pas en contact les uns des autres. Ils ne le seront qu'en position de reploiement, en fonction de la hauteur de goulotte nécessaire.

Les modules 5 constituant la goulotte 4, ainsi que leurs câbles de liaison 13,14, forment un dispositif disposé à l'extrémité de la bande convoyeuse 2 de matériaux 3, avec laquelle ils coopèrent par l'intermédiaire d'une embase de fixation 17 à l'intérieur de laquelle se trouve le treuil 12 associé au un moteur électrique 11, pour la commande des câbles 13,14, et conséquemment des modules 5 de la goulotte 4.

L'invention concerne également, pris séparément, une pièce d'usure inférieure « B » du module 5 en deux parties « A », « B » qui vient d'être décrit, pour la réalisation d'une goulotte télescopique 4, ladite pièce « B » constituant une pièce détachée remplaçable, indépendamment des autres composants de la goulotte 4.

## Revendications

1. Goulotte télescopique (4) pour le guidage et l'évacuation de matériaux (3), du type constituée par une pluralité de modules (5), de forme tronconique ou tronc-pyramidal, destinés à être montés coaxialement les uns au dessus des autres, chacun des modules (5,5a,5b) étant réalisé en deux parties distinctes (A,B), dont l'une supérieure (A) présente une ouverture plus large et constitue une pièce d'accueil des matériaux (3), et dont l'autre inférieure (B), est d'ouverture plus étroite, **caractérisée en ce que** ladite partie inférieure (B) constitue une pièce d'usure supportée et suspendue à la pièce d'accueil (A), lesdites parties distinctes (A,B), constitutives d'un même module, étant d'ouverture et de hauteur différentes, mais de conicité identique, de manière à s'emboîter par gravité coaxialement l'une dans l'autre, pour réaliser un module (5,5a,5b) dont la pièce d'usure inférieure (B), la plus exposée, est interchangeable.

2. Goulotte selon la revendication 1, **caractérisée en ce que** la pièce d'usure inférieure (B) de chacun des modules (5,5a,5b) la composant est réalisée dans un matériau dont la résistance à l'abrasion est supérieure au matériau dans lequel est réalisée la pièce d'accueil supérieure (A) du même module (5, 5a, 5b) .

3. Goulotte selon la revendication 2, **caractérisée en ce que** la pièce d'accueil supérieure (A) de chacun des modules (5,5a,5b) la composant est réalisée en polyéthylène haute densité.

4. Goulotte selon la revendication 2, **caractérisée en ce que** la pièce d'usure inférieure (B) de chacun des modules (5,5a,5b) la composant est réalisée en polyuréthane.

5. Goulotte selon l'une des revendications 1 à 4, **caractérisée en ce que** les modules (5,5a,5b) la composant sont de section circulaire.

6. Goulotte selon l'une des revendications 1 à 4, **caractérisée en ce que** les modules (5,5a,5b) la composant sont de section quadrangulaire.

7. Goulotte selon l'une des revendications 1 à 4, **caractérisée en ce que** les modules (5,5a,5b) la composant sont de section ovale.

8. Goulotte selon l'une des revendications 1 à 7, **caractérisée en ce que** les modules (5,5a,5b) la composant sont reliés les uns aux autres par des éléments de liaison flexibles (8).

9. Pièce d'usure inférieure (B) d'un module (5) en deux parties (A,B), utilisée pour la goulotte (4) selon l'une des revendications 1 à 8, **caractérisée en ce qu'**elle constitue une pièce détachée (B) remplaçable indépendamment des autres composants de ladite goulotte (4).

## Claims

1. Telescopic chute (4) for guiding and removing materials (3), of the type comprised of a plurality of modules (5), of tapered or pyramidal trunk shape, intended to be mounted coaxially above one another, with each of the modules (5, 5a, 5b) being carried out in two separate portions (A, B), of which the upper one (A) has a wider opening and constitutes a part for receiving the materials (3), and for which the other lower one (B) is of a narrower opening, **characterised in that** said lower part (B) constitutes a wearing part supported and suspended from the receiving part (A), said separate parts (A, B), constituting the same module, with a different opening and height, but of identical tapering, so as to nest via gravity coaxially in one another, in order to form a module (5, 5a, 5b) for which the lower wearing part (B), the most exposed, is interchangeable.

2. Chute according to claim 1, **characterised in that** the lower wearing part (B) of each of the modules (5, 5a, 5b) comprising it is made from a material of which the resistance to abrasion is greater than the material in which the upper receiving part of the same module (5, 5a, 5b) is made (A).

3. Chute according to claim 2, **characterised in that** the upper receiving part (A) of each of the modules (5, 5a, 5b) comprising it is made from high density polyethylene.

4. Chute according to claim 2, **characterised in that** the lower wearing part (B) of each of the modules (5, 5a, 5b) comprising it is made from polyurethane.

5. Chute according to one of claims 1 to 4, **characterised in that** the modules (5, 5a, 5b) comprising it are of circular section.

6. Chute according to one of claims 1 to 4, **characterised in that** the modules (5, 5a, 5b) comprising it are of quadrangular section.

7. Chute according to one of claims 1 to 4, **characterised in that** the modules (5, 5a, 5b) comprising it are of oval section.

8. Chute according to one of claims 1 to 7, **characterised in that** the modules (5, 5a, 5b) comprising it are connected together via flexible connecting elements (8).

9. Lower wearing part (B) of a module (5) in two parts (A, B), used for the chute (4) according to one of claims 1 to 8, **characterised in that** it comprised a spare part (B) that can be replaced independently of the other components of said chute (4).

## Patentansprüche

1. Teleskopschurre (4) zum Führen und Ausbringen von Materialien (3), derart gestaltet, dass sie aus einer Vielzahl an kegel- oder kegelstumpfförmigen Modulen (5) besteht, die dazu bestimmt sind, koaxial übereinander montiert zu werden, wobei jedes dieser Module (5, 5a, 5b) in zwei verschiedenen Abschnitten (A, B) ausgeführt ist, von denen ein oberer (A) eine breitere Öffnung aufweist, und ein Aufnahmeteil für die Materialien (3) darstellt, und der andere untere Abschnitt (B) eine engere Öffnung aufweist, **dadurch gekennzeichnet, dass** der besagte untere Teil (B) ein getragenes Verschleißteil darstellt, das im Aufnahmeteil (A) eingehängt wird, wobei die besagten verschiedenen Abschnitte (A, B), die ein und dasselbe Modul bilden, unterschiedliche Öffnungen und Höhen, jedoch gleiche Konizitäten aufweisen, sodass sie sich durch die Schwerkraft koaxial ineinanderfügen, um ein Modul (5, 5a, 5b) zu bilden, dessen unteres Verschleißteil (B), das stärker beansprucht wird, ausgetauscht werden kann.

2. Schurre nach Anspruch 1, **dadurch gekennzeichnet, dass** das untere Verschleißteil (B) eines jeden Moduls (5, 5a, 5b), aus dem sie gebildet wird, aus einem Werkstoff gefertigt ist, dessen Abriebfestigkeit höher ist als jene des Werkstoffes, aus dem das obere Aufnahmeteil (A) desselben Moduls (5, 5a, 5b) gefertigt ist.

3. Schurre nach Anspruch 2, **dadurch gekennzeichnet, dass** das obere Aufnahmeteil (A) eines jeden Moduls (5, 5a, 5b), aus dem sie gebildet wird, aus hochdichtem Polyethylen gefertigt ist.

4. Schurre nach Anspruch 2, **dadurch gekennzeichnet, dass** das untere Verschleißteil (B) eines jeden Moduls (5, 5a, 5b), aus dem sie gebildet wird, aus Polyurethan gefertigt ist.

5. Schurre nach einem der Ansprüche 1 bis 4, **dadurch gekennzeichnet, dass** die Module (5, 5a, 5b), aus denen sie gebildet wird, einen kreisförmigen Querschnitt aufweisen.

6. Schurre nach einem der Ansprüche 1 bis 4, **dadurch gekennzeichnet, dass** die Module (5, 5a, 5b), aus denen sie gebildet wird, einen vierkantigen Querschnitt aufweisen.

7. Schurre nach einem der Ansprüche 1 bis 4, **dadurch gekennzeichnet, dass** die Module (5, 5a, 5b), aus denen sie gebildet wird, einen ovalen Querschnitt aufweisen.

8. Schurre nach einem der Ansprüche 1 bis 7, **dadurch gekennzeichnet, dass** die Module (5, 5a, 5b), aus denen sie gebildet wird, durch flexible Verbindungselemente (8) miteinander verbunden werden.

9. Unteres Verschleißteil (B) eines Moduls (5) bestehend aus zwei Abschnitten (A, B), das für die Schurre (4) nach einem der Ansprüche 1 bis 8 verwendet wird, **dadurch gekennzeichnet, dass** es ein Ersatzteil (B) bildet, das unabhängig von den anderen Bestandteilen der besagten Schurre (4) ausgetauscht werden kann.
